# EUROPEAN PATENT APPLICATION

(11) **EP 0 572 123 A2**
(43) Date of publication of application: **01.12.1993**
(21) Application number: 93303432.4
(22) Date of filing: 30.04.1993
(51) Int. Cl.: G05B 19/42

(54) **Apparatus for digitising a surface portion of a three dimensional article**

(30) Priority: 02.05.1992 GB 9209594
(71) Applicant: BRITISH UNITED SHOE MACHINERY LIMITED, Belgrave Leicester LE4 5BX (GB); USM ESPANA, S.L., E-08027 Barcelona (ES)
(72) Inventor: Reedman, David Creyke, GB Wartnaby, LE14 3HY (GB); Hudman, Frederick Mark, Hull,North HumbersideHU93AU (GB)
(74) Representative: Atkinson, Eric

(57) **Abstract**

For digitising a surface portion of a three-dimensional article a light source (14) is provided which projects onto the surface portion to be digitised of an article (S) a narrow band of light which extends over the surface portion. In addition, by effecting relative movement between the article and the light source (14) the narrow light band is caused to traverse progressively over the surface portion from one end thereof to the other. A camera (22) comprising a two-dimensional array of cells (26) monitors the location of the narrow light band at successive localities along its traversed path, the cells of the camera being illuminated according to the incidence thereon of light reflected from the narrow beam, and processor means is provided whereby the location of the narrow light band at selected intervals in its traverse are converted to digitised coordinate axis values, along three axes, said values thus being representative of the contour of the surface portion. The apparatus may be free-standing, serving to digitise the surface of an article, e.g. a shoe bottom, in an individual operation, or alternatively may be incorporated in a machine for effecting a progressive operation, again, e.g. on shoe bottoms. The apparatus may also be used for monitoring edges of components and for determining the configuration of marginal portions of such components, in order to enable the operating path of a tool at or adjacent such edge to be automatically determined, or may be used in a machine for pulling an article over a former e.g. a shoe pulling and lasting machine.

## Description

This invention is concerned with apparatus for digitising a surface portion of a three-dimensional article.

One such apparatus is disclosed in EP-A-0 422 946, this apparatus comprising a support for supporting an article, e.g. a shoe last, a surface portion of which is to be digitised, a light source, e.g. a laser, for directing along a path extending, in a first direction, towards the support a light beam so as to strike the surface of the article, means for effecting relative movement between the support and the light source, in a further direction, whereby to cause the light impinging on the surface of the article to traverse progressively over the surface portion thereof, a camera comprising a line array of cells and being directed, at an acute angle to the path of light, towards the point of incidence of the light on the surface portion, the cells of the camera thus being illuminated according to the incidence thereon of light reflected from said point of incidence, and processor means whereby the location of the light and selected intervals in the traverse thereof over the surface portion, including in said first direction, determined according to the incidence of the light on the cells of the camera as aforesaid, is converted to digitised coordinate axis values, which are thus representative of the contour of the surface portion.

More particularly, in the operation of the apparatus the support is caused to rotate about an axis extending, normally to the axis of the beam of light, through the substance of the article and in addition relative movement in a direction parallel to said axis takes place between the light source and the support so that the whole of the surface of the article can be traversed by the light beam and thus a "picture" of the whole of the contour of the surface can be thus achieved.

It will be appreciated that using a line scan camera and a point of light impinging on the article surface, the process of digitising is relatively slow and, whereas this relative slowness is not viewed as detrimental for certain purposes, e.g. the digitising of a last, in many applications the time required to determine the contour would render the system unacceptable. In particular, where for example it is desired to determine the surface contour immediately in advance of a tool which is to operate upon that surface, in circumstances where the tool progresses along the surface portion, the speed of operation is preferably to be determined by the speed at which the tool can operate rather than by the time required to determine the surface contour.

It is thus one of the various objects of the present invention to provide an improved apparatus for digitising a surface portion of a three-dimensional article, in the operation of which the above disadvantages are mitigated.

The invention thus provides apparatus for digitising a surface portion of a three-dimensional article comprising a support for supporting an article a surface portion of which is to be digitised, a light source for directing along a path extending, in a first direction, towards the support a light beam of a configuration such that the light impinges on the surface portion to be digitised of an article supported by the support along a narrow band extending, in a second direction, over the surface portion, means for effecting relative movement between such article and the light source, in a third direction extending normally to the second direction, whereby to cause the narrow light band to traverse progressively over the surface portion from one end thereof to the other, a camera comprising a two-dimensional array of cells extending in a direction parallel to said second direction, the camera being directed, at an acute angle to said path of light, towards the narrow light band as it traverses over the surface portion as aforesaid, the cells of the camera thus being illuminated according to the incidence thereon of light reflected from the narrow band, and processor means whereby the location of the narrow light band at selected intervals in the traverse thereof over the surface portion not only in the second and third directions but also in said first direction, determined according to the incidence of the light on the cells of the camera as aforesaid, is converted to digitised coordinate axis values, along three axes, said values thus being representative of the contour of the surface portion.

It will be appreciated that by using a two-dimensional array of cells in the camera and by utilising also a light beam of a configuration such that the light impinges on the surface portion along a narrow band, it is now possible to reduce substantially the physical movement required to traverse the surface portion and to process the information thus obtained, so that the time required for determining the surface contour is correspondingly also reduced.

In one embodiment of the invention the camera has an optical axis directed towards the path of light from the light surface, the point of intersection of the optical axis with said path defining a notional reference surface which extends in said second and third directions and on which said point of intersection lies. In such a case, moreover, in determining the location of the narrow light band as aforesaid its relationship to the reference surface in said first direction is detected by the camera according to the incidence of the light on the cells. Alternatively, in another embodiment the processor means determines a reference datum in the first direction according to the location of a selected point along the narrow light band when first detected by the camera by the illumination of its cells as aforesaid, said reference datum being constituted by a notional reference surface which is of predetermined configuration and extends in said second and third directions and on which the selected point lies. In such a case, furthermore, in determining the location of said narrow light band subsequently at intervals in the traverse thereof over the surface portion as aforesaid its relationship with said reference surface in said first direction is detected by the camera according to the incidence of the light on the cells.

In either case, moreover, the notional reference surface may be constituted by a reference plane and the first, second and third directions by three orthogonal axes meeting at the point of intersection of the optical axis of the camera with the path of light or at said selected point, as the case may be, or alternatively relative movement between the support and the light source may take place along an arcuate path, and thus the notional reference surface is part-cylindrical, about an axis extending parallel to the second direction, and the first direction extends perpendicularly to a tangent to the arcuate path at said point of intersection or at said selected point, as the case may be.

In any of the aforementioned embodiments preferably the support is arranged to hold clamped an article a surface portion of which is to be digitised and the means for effecting relative movement between such article and the light source is effective to cause relative movement to take place in the third direction between the support and the light source, the camera being mounted in a fixed relationship with the light source whereby, as relative movement is effected as aforesaid and the narrow band of light thus traverses the surface portion, the camera continuously monitors said narrow band. Such an arrangement has been found to be advantageous when the apparatus is incorporated in a machine for operating progressively along a selected surface portion of an article, said machine comprising tool supporting means between which and said support relative movement can take place in the first, second and third directions. In one such machine the light source and camera may be so mounted in relation to the tool supporting means that as such relative movement takes place corresponding relative movement takes place in said second and third directions between the support on the one hand and the light source and camera on the other, the arrangement being such that the narrow band of light is located so as to impinge on the surface portion in advance of engagement of the latter by a tool supported by the tool supporting means and is monitored by the camera so as to determine the location of the light band at any given part of the surface portion in advance of the tool operating on said part. Alternatively, in another such machine the light source and camera may be mounted for movement in all three directions together with the tool supporting means, in which case conveniently the narrow band of light is located so as to impinge on said surface portion in advance of engagement of the latter by a tool supported by the tool supporting means and is monitored by the camera so as to determine the location of the light band at any given part of the surface portion in advance of the tool operating on such part. In such machine, furthermore, the processor means also monitors such relative movement taking place in the first direction and modifies accordingly digitised coordinate axis values relating to the relationship as detected by the camera between the reference surface and the light band.

The apparatus in accordance with the invention is thus suitable for use e.g. in a shoe bottom roughing machine of the type disclosed in e.g. EP-A-0 043 645 or indeed a machine for applying adhesive to shoe bottoms as described e.g. in EP-A-0 276 944, in each of which relative movement takes place between the light source and camera on the one hand and the support on the other along X- and Y- axes. In one instance the light source and camera are so mounted that no Z-axis movement is effected, so that the notional reference surface is maintained at a particular position throughout the whole of the digitising and roughing operation; alternatively if Z-axis movement takes place, the reference surface is effectively moved in said first direction, the amount of such movement being monitored by the processor means.

Particularly where the light source and camera are mounted for movement in the first, second and third directions together with tool supporting means of the machine, conveniently as such relative movement takes place corresponding relative movement takes place between the support on the one hand and the light source and camera on the other, the arrangement being such that the narrow band of light is located so as to impinge on said surface portion in advance of engagement of the latter of a tool supported by the tool supporting means and is monitored by the camera so as to determine the location of the light band at any given part of the surface portion in advance of the tool operating on said part, in which case the processor means also monitors the position, in the first direction, of an operating surface of such tool and for each set of digitised coordinate axis values, determines from the current position of said surface a notional reference surface which extends in the first and second directions and on which such operating surface lies, the relationship between the reference surface and the location of the narrow band of light then being detected by the camera.

It will be appreciated that in some circumstances a tool may be caused to operate firstly progressively in one direction and thereafter progressively in an opposite direction. In such a case, in order that the light source and camera are maintained in advance of engagement of the tool with the article surface, two cameras may be provided, each mounted in a fixed relationship with the light source and each directed at an acute angle to said path of light at opposite sides thereof. Whereas in some cases, furthermore, a single light source may be used with two cameras, preferably each camera has a light source associated therewith. It will of course be appreciated that using two cameras only one is effective at any given time, namely that camera which cooperates with a light band lying in advance of engagement of the surface portion by a tool.

An apparatus in accordance with the invention may also be incorporated in a machine for operating progressively along or adjacent a selected marginal surface portion of an article, the machine comprising tool supporting means between which and an article supported by the support relative movement can take place in the second and third directions, in which machine the article is not clamped by the support, between which and the tool relative movement then takes place, but rather is merely held against a support and moved relative thereto, e.g. a sewing machine. In such a case, conveniently the light source is again so arranged that the narrow band of light is located so as to impinge on the surface portion in advance of engagement of the latter by a tool supported by the tool supporting means, and progressively the camera detects the margin of such surface portion and also the configuration of the marginal portion as the light band traverses over the surface portion as aforesaid and the processor means is effective to convert the successive locations of the light band to digitised coordinate axis values representative of the configuration of said marginal portion, the processor means on the basis of such values generating drive signals in response to which relative movement is effected between the tool supporting means and said article in the second and third directions.

An apparatus according to the invention may additionally be advantageously incorporated in a machine for pulling an article over a former so as to locate the article in a desired position thereon, the former being supported by the support. One machine comprises an array of pincer means by which the article can be gripped and motor means whereby relative movement can be caused to take place between the former and the pincer means such that the article can be tensioned over the former, wherein the values representative of the contour of the surface portion of the article are compared with reference data defining the desired contour of the surface portion and the motor means are operated in response to such comparison so as to adjust the tension of the article and thus the contour of the surface portion until the values representative of the contour of the surface portion correspond to the reference data thereby indicating that the article is located as desired.

One such machine, that is, a shoe pulling over and lasting machine is described in EP-A-0 124, 229, in which conventionally a shoe is supported bottom down on a last, which serves as a former, and the shoe upper is customarily tensioned by the operation of the motor means effecting relative lengthwise movement between the last and array of pincers, and thereafter, by using so-called "discretionary pull" levers, the operator can effect operation of the individual motors associated with the side pincers to correct the position of the shoe upper on its last to satisfy himself that the shoe upper is correctly positioned, prior to operation of the wiping means. By using a pulling and lasting machine incorporating the apparatus according to the invention, the tension of the upper can be adjusted as desired automatically by reference to preprogrammed data without the need for final operator adjustments. Determining the contours of the whole shoe upper rather than merely identifying the location of an edge means that the desired positioning and shaping of the upper is not dependent upon first accurately locating the last and using the accurate location as a reference point. Instead, by analysing the contours themselves, which are obviously indicative of the shape of the upper, the location of the last need not, within reason, be entirely accurate because the tension of the upper can be adjusted until the contours as identified match the shaping of the upper which is desired. It is however, possible from "a contour map" of the upper to determine edges and boundaries (such as toplines, mudguards or aprons) and to adjust the tension in the upper until the edges or boundaries are in a position from which it follows that the upper as a whole will be positioned as required.

In a further embodiment of the invention, which could be used for a similar purpose to that described in EP-A-0 422 946, the article is supported for rotation about an axis extending parallel to such third direction and passing through the substance of the article, and by rotating the article to present different surface portions thereof to the camera the whole of the surface thereof can be digitised. In using the apparatus in accordance with the invention in this manner, however, it is envisaged that it will be necessary to rotate the article only through a relatively small number of positions, the processor means monitoring each such position, and while the article is thus supported in each such position the whole of the surface portion thereof exposed to the light source is traversed by the light source, and thus by the narrow band, and the camera; that is to say, each portion thus exposed is treated as a three-dimensional surface portion and each such portion as digitised thereafter related to the other surface portions by the processor means, whereby the whole of the surface is thus converted to digitised coordinate axis values representative of the contour of the surface as a whole.

There now follows a detailed description, to be read with reference to the accompanying drawings, of various embodiments of the invention. It will of course be appreciated that these various embodiments have been selected for description merely by way of non-limiting example.

In the accompanying drawings:-
Figure 1 is a diagrammatic representation showing a shoe bottom onto which a narrow band of light is projected, which band in turn is monitored by a camera;

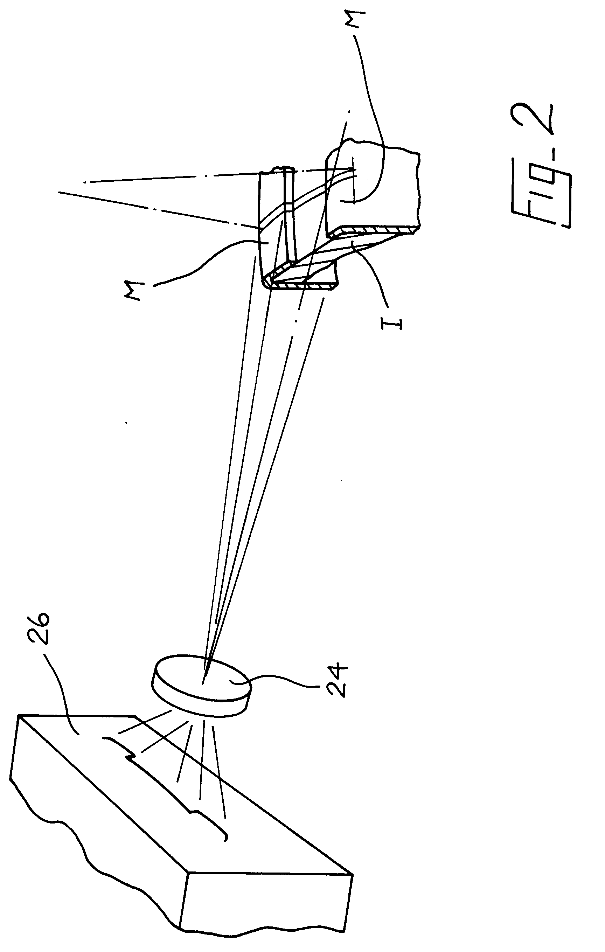

Figure 2 is a diagrammatic representation indicating an image of such band of light as received by the camera;
Figure 3 is a diagrammatic representation of the profile of a shoe bottom, e.g. in the waist region thereof;
Figure 4 is a view generally similar to Figure 2 but showing a flat shoe component being processed; and
Figure 5 is a diagrammatic representation of a shoe upper being pulled over a last.

The apparatus in accordance with the invention is for use in digitising a surface portion of a three-dimensional article. The apparatus is hereinafter described with reference to shoes and shoe components, but it will be appreciated that such references are by way of example only and not by way of limitation of the invention.

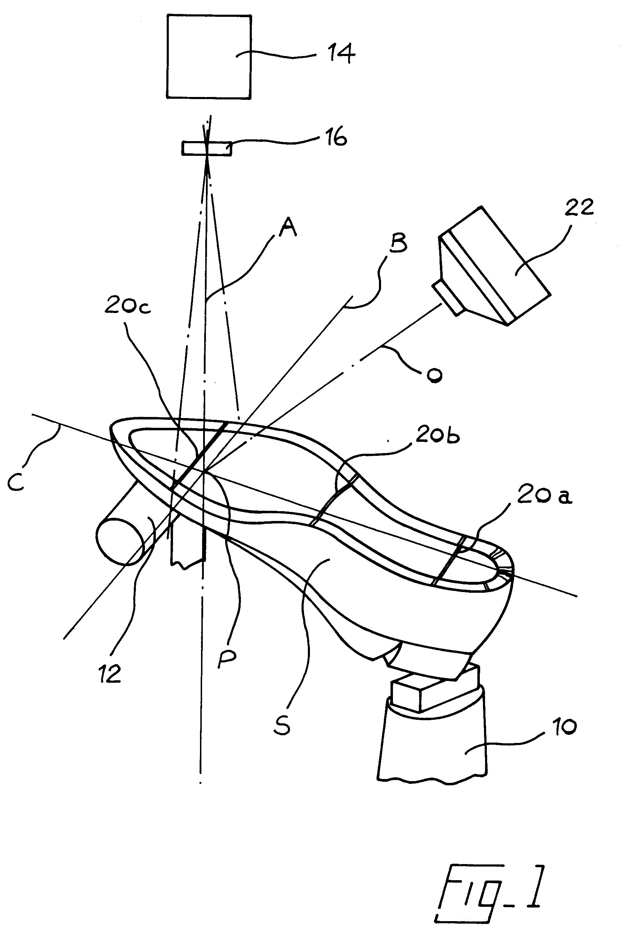

Figure 1 is a schematic view showing a lasted shoe S supported, bottom uppermost, on a last post 10 comprising a heel pin (not shown) and a toe support 12, whereby the shoe bottom remains exposed; the shoe bottom in this case constitutes a surface portion to be digitised of the shoe.

Mounted above the support 10,12 is a light source in the form of a laser 14 which emits a light beam through a lens 16 in a first direction A towards the support 10,12, the light beam being so configured that the light impinging on the shoe bottom is in the form of a narrow band 20 (20a, 20b, 20c) extending, in a second direction B, over the width of the shoe bottom.

The support 10,12 is mounted for movement relative to the light beam from the laser 14 in a third direction C whereby the narrow light band is caused to traverse progressively over the length of the shoe bottom from one end to the other (in this case from the heel end to the toe).

In the particular case shown the three directions A, B, C are each represented by an axis, and the three axes are arranged perpendicularly to one another, meeting at a single point of intersection P; the axis A is thus the heightwise axis, the axis B the widthwise axis and the axis C the lengthwise axis in this case.

The apparatus further comprises a camera 22 having an optical axis O which intersects the three axes A, B, C at the point of intersection P. The camera comprises a lens 24 and a two-dimensional array of cells 26. The number of cells in the array is dependent upon the resolution of image required and it has been found suitable to use an array comprising 4 four x 256 cells.

When the apparatus is in use the light reflected from the narrow band impinging upon the surface portion is collected through the lens 24 and illuminates the array of cells 26 whereby the shape of the narrow band, and thus the shape of the surface portion upon which it impinges, is "captured" on the array 26.

The apparatus further comprises processor means (not shown) whereby the image captured on the array is converted to digitised coordinate axis values, along three axes. By thus capturing a succession of images along the length of the shoe bottom, therefore, a set of digitised coordinate axes values is achieved, which set is thus representative of the contour of the whole of the surface portion of the shoe bottom. It will of course be appreciated that, in addition to the information from the array of cells 26, the processor means also takes into account the lengthwise (C-axis) movement of the narrow band over the surface portion.

Any suitable processor means may be provided, but preferably using such means each successive location of the narrow light band as imaged on the array 26 is loaded into the computer memory as a four-bit image (16 shades) which is then thresholded and cleaned up in a pre-processing step so as to eliminate noise. The image then undergoes "line-thinning" using image-specific characteristics to ensure speed of operation and thereby removing any "blooming" that may have occurred on the camera due to the intensity of the light beam from the laser. The resulting points are then stored in a two-axis (x,y) format, all surplus points then being eliminated. These stored points, together with information concerning the C-axis movement then constitute a set of digitised coordinate axis values representative of the narrow light band at a particular location and the totality of the sets thus obtained constitutes a data set representative of the contour of the shoe bottom surface.

In order to relate the location of the narrow band of light 20 heightwise (i.e. in the A-axis direction), in an initial calibration step the processor means determines a reference plane R which extends along the axes B,C and in which the point of intersection P lies, the axis A extending perpendicularly to the plane and passing through the point P. The reference plane R represents a datum with which the actual location of the narrow band of light, as imaged on the array 26, can be compared. In other words, the reference plane represents x0 on the x-y format. Moreover, because the optical axis O of the camera intersects the reference plane R at the point P, the point P can be used as a y0 datum in said format. In this way the x,y format is spatially located with reference to the machine of which the support 10,12 forms part.

In an alternative embodiment the contour of the surface portion can be determined without reference to a datum or reference surface which is related specifically to the machine, but rather a datum or reference surface may be determined in the context of the article surface itself, that is to say, when the narrow light band first illuminates a portion of the article, in this case the shoe bottom, that point of incidence takes the place of the point of intersection P and successive locations, as monitored, of the narrow light band are calculated with reference to that initial reference surface. When subsequently this information is to be used in a machine, then it is at that stage then necessary to relate the spatially independent shape, stored as a data set to a reference plane in the particular machine.

Whereas in the case of the two embodiments referred to above the three directions A, B, C are represented by three orthogonal axes, it may be that the relative movement between the support 10,12 on the one hand and the light source 14 and camera 22 on the other is not rectilinear but may be e.g. arcuate. In such a case this does not affect the calculation provided that the first direction A extends perpendicularly to a tangent to the arcuate path at the point P (or the corresponding point in the second embodiment referred to above); that is to say, the image projected onto the array of cells 26 will not differ significantly from that which is created by rectilinear movement, certainly after the pre-processing and line-thinning steps in the processing of the information.

The apparatus in accordance with the invention may be a free-standing apparatus, that is to say it may be used independently of any particular machine for digitising the contour of e.g. a shoe bottom, this digitised information then being used in a number of different machines for effecting operations on the shoe bottom. Such operations would include for example shoe bottom roughing, application of adhesive to shoe bottoms and indeed the attachment of soles to shoe bottoms. Alternatively, however, it is envisaged that the apparatus in accordance with the invention be incorporated in a machine for operating progressively along a selected surface portion of an article. Again, suitable applications would be shoe bottom roughing, shoe bottom "cementing" and shoe cell attachment. Thus, in a machine generally similar to that described in EP-A-0 043 645, in which a shoe support for supporting a lasted shoe, bottom up, is moved relative to tool supporting means whereby a tool supported by the supporting means is caused to effect a progressive operation along marginal portions of the bottom of shoe supported by the shoe support, the light source 14 and camera 22 of the apparatus in accordance with the invention may be mounted on the tool supporting means, the arrangement being such that the narrow band of light is located so as to impinge on the surface portion of the shoe bottom in advance of engagement of the latter by a tool supported by the tool supporting means and being monitored by the camera so as to determine the location of the light band at any given part of the surface portion in advance of the tool operating on that part. In the machine referred to, furthermore, the tool supporting means is mounted for movement both heightwise (i.e. in the first direction A) and also widthwise (in the second direction B) relative to the shoe bottom as it moves, in an arcuate path, in the third direction C.

It will thus be appreciated that, by reason of the heightwise movement of the tool supporting means, the light source and camera will also move heightwise as the tool operates progressively along the shoe bottom. The degree of heightwise movement of the tool supporting means is, however, monitored by the processor means, since, as already mentioned, the heightwise movement is effected by a stepping motor, and consequently the information which the processor receives from the array of cells 26 is modified by the heightwise (A) direction information in processing the information to obtain the digitised coordinate axis values as aforesaid. Instead of mounting the light source 14 and camera 22 on the tool supporting means for heightwise movement therewith, it may also be envisaged that they are mounted in such a manner as not to move with the tool supporting means in the heightwise direction. Similarly, the light source and camera may be mounted so as not to move in the widthwise (B) direction, which also requires modification of the information obtained from the array of cells by the processor means.

Moreover, it should be borne in mind that in the aforementioned machine a roughing operation takes place progressively in one direction along one side of the shoe bottom and thereafter in an opposite direction along the other side. In order to accommodate this arrangement, while still maintaining the "reading" of the narrow band location in advance of the oncoming tool, either the single light source and camera must be repositioned for the return movement or separate cameras and, if desired, separate light sources, are to be provided at either side of the tools, operating individually according to whether the tool is operating progressively in one direction or the opposite direction.

In such a case, therefore, each location of the narrow light band as monitored by the camera 22 is immediately processed and then applied to the oncoming tool thus to direct the path of the tool accordingly. Indeed, if desired the processor means may be so arranged that for each processed image of the narrow light band, projected on the array 26, the heightwise (A direction) position of the tool itself, which will be known since the heightwise position is determined by a stepper motor (not shown) is used to determine a datum or reference line with which the narrow light band location can then be compared, the deviation of said band from said line being then treated as an error signal which is automatically corrected through the processor means acting directly on the various stepper motors by which the movement of the tool relative to the shoe support, in the three directions, is controlled.

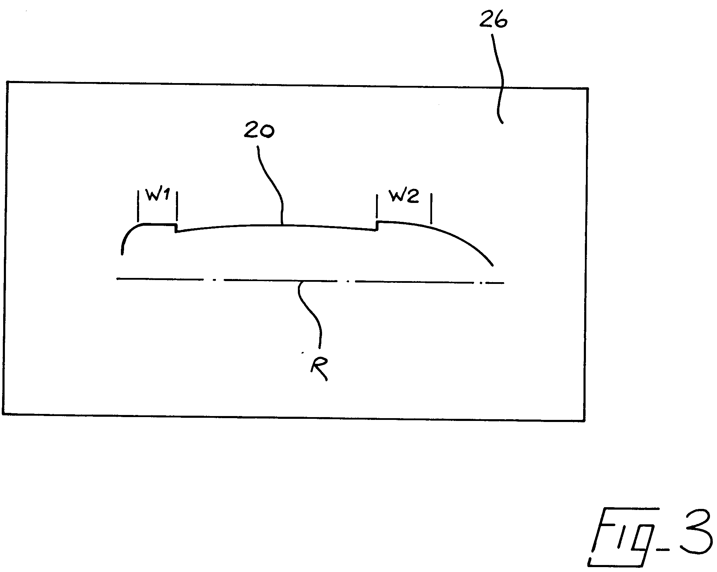

The use of the apparatus in accordance with the invention in this manner is beneficial in particular in that it does away with the need for pre-programming the path of the tool for different styles of shoe to be operated upon. Moreover, once the information has been obtained, again it may be used for subsequent operations to be performed in like manner, e.g., as already mentioned, for shoe bottom cementing and shoe sole attachment. Moreover, as can be seen from the diagrammatic representation of Figure 3, it is not merely a question here of determining an edge of the surface portion and enabling a tool then to operate up to the edge, but rather the profile of the edge can be monitored and the locality of the marginal portion which is to be operated upon can then be determined. This is particularly important where, as can be seen in Figure 3 (at the left hand side) the edge of the surface is indeterminate, as is the case of a shoe, especially a ladies' shoe, in the inside waist region thereof. By being able to view the profile of the marginal portion as exemplified in Figure 3, and by programming, e.g. according to change of radius of the marginal portion, the locality to be operated upon, e.g. roughed and subsequently cemented, can be automatically determined, instead of, as is currently practised, relying upon the skill and experience of the operator to determine the path of the tool in such indeterminate regions. The programming which is required to achieve such automatic location will of course be able to take into account, as currently does the operator, the position in which a sole is subsequently to be attached, since it is necessary to apply adhesive to the attachment surfaces for sole attachment and, prior to such adhesive being applied, to roughen the surface in order to enable the adhesive to create the proper bond with a sole to be attached thereto. Using the apparatus in accordance with the invention, therefore, it is possible to supply the relevant information concerning the profile of the outsole to be attached and from that information to deduce the regions (w) of the shoe bottom which will require to be roughed as an initial operation and thereafter cemented. In Figure 3 wl represents the area at the outside waist region of a shoe bottom and w2 the area to be roughed at the inside waist region. These localities (w) are of course selected merely by way of example.

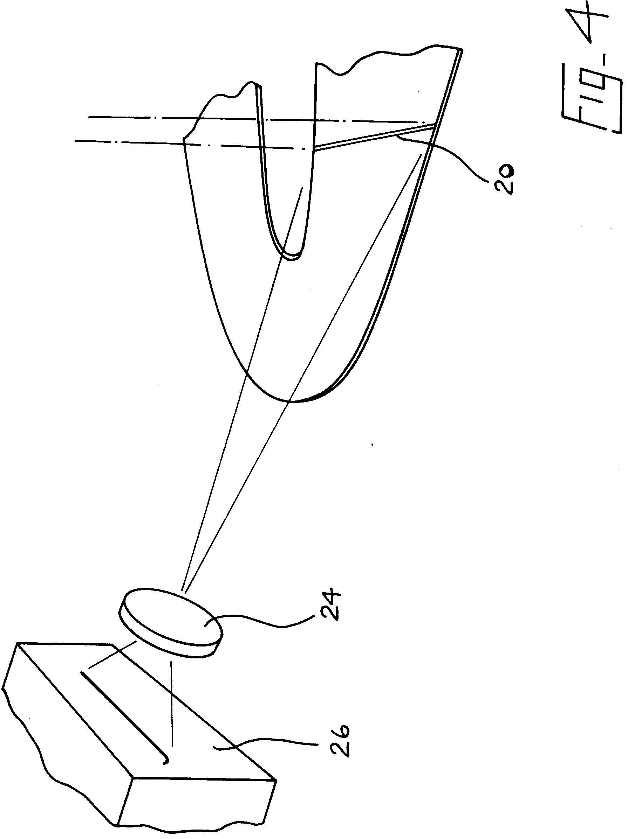

The determination of the edge of a workpiece, and in particular the configuration of a marginal portion of a workpiece may also be utilised in the case of flat components, especially where it is desired to carry out an operation on such components at or adjacent the edge. For example in some instances, e.g. in a sewing operation, it may be desirable to operate along a marginal portion of a flat shoe upper component, and more particularly to effect a stitch line at or closely adjacent the edge. As shown in Figure 4, therefore, the apparatus in accordance with the invention may be utilised for determining the configuration of a workpiece edge and, as can be seen in Figure 4, especially where one such edge is not "sharp", but rather represented by a radiused lined. In such a case again, therefore, the edge at or adjacent which stitching has to take place is relatively indeterminate, especially bearing in mind that workpieces may differ one from the other along such an edge, which may well be folded over, and in such circumstances the location of the stitch line can be determined automatically by monitoring the edge and its configuration, in the same manner as previously described with reference to roughing and cementing.

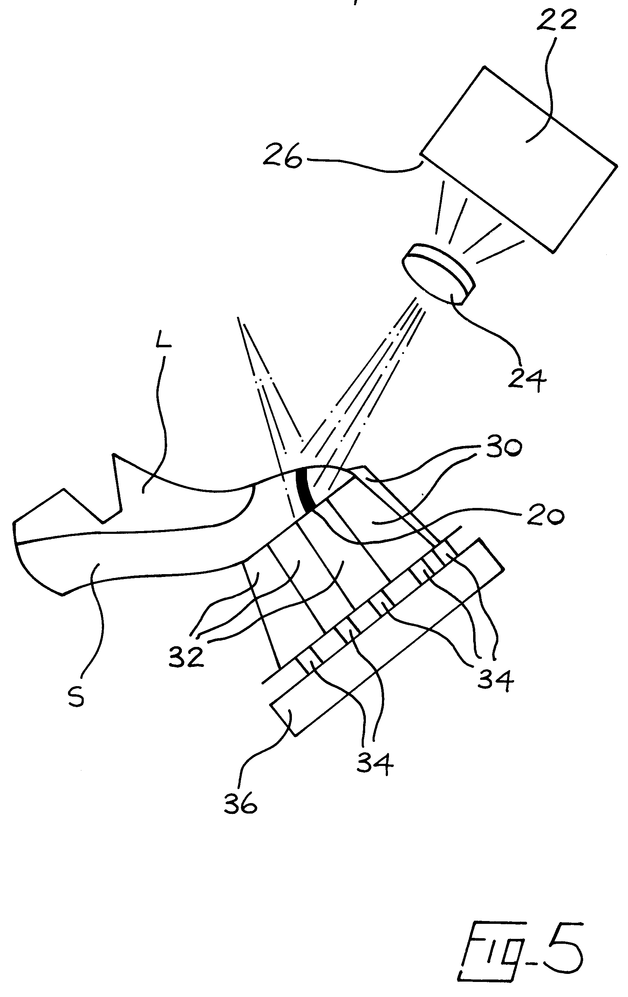

The apparatus according to the invention may alternatively be utilised to determine the surface contours of an article that has been shaped as desired by pulling it over a former, for example, in the manufacture of shoes, as shown in Figure 5, where a pulling over and toe lasting machine involves pulling a shoe upper around a last supported on a last support (not shown) situated at an operating locality. Also arranged at the operating locality, in a generally U-shaped configuration about the last support is pincer means, comprising three pincers 30 arranged about the toe end of the shoe and two sets of side pincers 32, one arranged at each side of the pincers 30 and each set comprising three side pincers 32, there being thus nine pincers 30,32 in all. Each of the pincers 30,32 has associated therewith an actuator (not shown) by which the jaws are actuated to grip a marginal portion of the upper S of a shoe placed on its last L. In addition each of the pincers 30,32 has associated with it a motor 34 by which its associated pincer 30,32 can be moved lengthwise relative to the shoe support thus to tension the shoe S after it has been gripped as aforesaid. The motors 34 are mounted on a plate 36 between which and the last support relative heightwise movement may take place, with the pincers 30,32 acting as a unit, thus again to tension the upper about its last L.

Once the upper S has been initially tensioned, the apparatus in accordance within the invention can be utilised to determine the contour of the whole upper S on the last L. This "contour map" can then be compared with a model of reference data, perhaps stored on CAD, of the desired position and shape of the upper, in which it is to be tacked or glued to an insole. The comparison can take the form either, for example, of: analysing each set of coordinate values for each location of the narrow light band on the upper, that is each sectional contour profile, with the corresponding set of values from the model; or, having determined the contours of the whole of the upper, identifying from these contours the position of edges within the upper construction, such as the top edge around the throat, and identifying from the model where the top edge should lie. If it is established that the position of the upper on the last does not conform to the required data, the motors operate the pincers so as to apply tension to the upper and alter its surface contour. These alterations continue, followed each time by an analysis of the contours of the upper, until the upper conforms to the desired position and shape, and the upper is then attached to an insole.

It should also be noted that, although in the foregoing description reference has been made only to digitising one surface portion of a workpiece, it is possible using the apparatus in accordance with the invention, and providing a support which can be used to support an article for rotation about an axis extending through the substance of the article, to present different surface portions successively to the light source 14 and camera 22 so that a number of facets of the article can be individually monitored, the processor means then compiling from the data obtained from monitoring the various surface portions, a single data set which is representative of the contour of the whole of the surface of the article. In this way, for example, a last digitising apparatus may be contemplated which, by the camera viewing the surface of a last from a relatively small number of positions, the total surface of the last can be digitised, in substantially less time than is the case with the apparatus first referred to above.

## Claims

1. Apparatus for digitising a surface portion of a three-dimensional article comprising
a support (10,12) for supporting an article (S) a surface portion of which is to be digitised,
characterised by a light source (14) for directing along a path extending, in a first direction (A), towards the support (10,12) a light beam of a configuration such that the light impinges on the surface portion to be digitised of an article (S) supported by the support (10,12) along a narrow band (20) extending, in a second direction (B), over the surface portion,
means for effecting relative movement between such article (S) and the light source (14), in a third direction (C) extending normally to the second direction (B), whereby to cause the narrow light band (20) to traverse progressively over the surface portion from one end thereof to the other,
a camera (22) comprising a two-dimensional array of cells (26) extending in a direction parallel to said second direction (B), the camera (22) being directed, at an acute angle to said path of light, towards the narrow light band (20) as it traverses over the surface portion as aforesaid, the cells (26) of the camera (22) thus being illuminated according to the incidence thereon of light reflected from the narrow band (20), and
processor means whereby the location of the narrow light band (20) at selected intervals in the traverse thereof over the surface portion not only in the second and third directions (B,C) but also in said first direction (A), determined according to the incidence of the light on the cells (26) of the camera (22) as aforesaid, is converted to digitised coordinate axis values, along three axes, said values thus being representative of the contour of the surface portion.

2. Apparatus according to Claim 1 wherein the camera (22) has an optical axis (0) directed towards the path of light from the light surface, the point of intersection (P) of the optical axis (0) with said path defining a notional reference surface which extends in said second and third directions (B,C) and on which said point of intersection lies,
and wherein in determining the location of the narrow light band (20) as aforesaid its relationship to the reference surface in said first direction (A) is detected by the camera (22) according to the incidence of the light on the cells (26).

3. Apparatus according to Claim 2 wherein the notional reference surface is constituted by a reference plane and the first, second and third directions (A,B,C) by three orthogonal axes meeting at the point of intersection (P) of the optical axis (0) of the camera (22) with the path of light.

4. Apparatus according to Claim 2 wherein relative movement between the support (10,12) and the light source (14) takes place along an arcuate path, and thus the notional reference surface is part-cylindrical, about an axis extending parallel to the second direction (B), and the first direction (A) extends perpendicularly to a tangent to the arcuate path at said point of intersection of the optical axis (P) of the camera (22) therewith.

5. Apparatus according to Claim 1 wherein the processor means determines a reference datum in the first direction (A) according to the location of a selected point along the narrow light band (20) when first detected by the camera (22) by the illumination of its cells (26) as aforesaid, said reference datum being constituted by a notional reference surface which is of predetermined configuration and extends in said second and third directions (B,C) and on which the selected point lies,
and wherein in determining the location of said narrow light band (20) subsequently at intervals in the traverse thereof over the surface portion as aforesaid its relationship with said reference surface in said first direction (A) is detected by the camera (22) according to the incidence of the light on the cells (26).

6. Apparatus according to Claim 5 wherein the notional reference surface is constituted by a reference plane and the first, second and third directions (A,B,C) by three orthogonal axes meeting at said selected point.

7. Apparatus according to Claim 5 wherein relative movement between the support (10,12) and the light source (14) takes place along an arcuate path, and thus the notional reference surface is part-cylindrical about an axis extending parallel to the second direction (B), and the first direction (A) extends perpendicularly to a tangent to the arcuate path at said selected point.

8. Apparatus according to any one of the preceding Claims wherein the support (10,12) is arranged to hold clamped an article (S) a surface portion of which is to be digitised and the means for effecting relative movement between such article (S) and the light source (14) is effective to cause relative movement to take place in the third direction (C) between the support (10,12) and the light source (14),
and wherein the camera is mounted in a fixed relationship with the light source (14) whereby, as relative movement is effected as aforesaid and the narrow band of light (20) thus traverses the surface portion, the camera (22) continuously monitors said narrow band (20).

9. Apparatus according to Claim 8 wherein two cameras (22) are provided, each mounted in a fixed relationship with the light source (14) and each directed at an acute angle to said path of light at opposite sides thereof.

10. Apparatus according to Claim 9 wherein each camera (22) has a light source (14) associated therewith.

11. Apparatus according to any one of Claims 8 to 10 incorporated in a machine for operating progressively along a selected surface portion of an article (S), said machine comprising tool supporting means between which and said support (10,12) relative movement can take place in the first, second and third directions (A,B,C),
wherein as such relative movement takes places corresponding relative movement takes place in said second and third directions (B,C) between the support (10,12) on the one hand and the light source(s) (14) and camera(s) (22) on the other, the arrangement being such that the narrow band of light (20) (or one such band) is located so as to impinge on the surface portion in advance of engagement of the latter by a tool supported by the tool supporting means and is monitored by the camera (or the appropriate one of the cameras) (22) so as to determine the location of the light band (20) at any given part of the surface portion in advance of the tool operating on said part.

12. Apparatus according to any one of Claims 8 to 10 incorporated in a machine for operating progressively along a selected surface portion of an article (S), said machine comprising tool supporting means between which and said support (10,12) relative movement can take place in the first, second and third directions (A,B,C),
wherein as such relative movement takes place corresponding relative movement takes place between the support (10,12) on the one hand the light source(s) (14) and camera(s) (22) on the other, the arrangement being such that the narrow band of light (or one such band) (20) is located so as to impinge on said surface portion in advance of engagement of the latter by a tool supported by the tool supporting means and is monitored by the camera (or in the appropriate one of the cameras) (22) so as to determine the location of the light band (20) at any given part of the surface portion in advance of the tool operating on such part,
and wherein the processor means also monitors such relative movement taking place in the first direction (A) and modifies accordingly digitised coordinate axis values relating to the relationship as directed by the camera (22) between the reference surface and the narrow band of light (20).

13. Apparatus according to Claim 8 when tied directly to Claim 1 or to either one of Claims 9 and 10 when tied to thus tied Claim 8 incorporated in a machine for operating progressively along a selected surface portion of an article (S), said machine comprising tool supporting means between which and said support (10,12) relative movement can take place in the first, second and third directions (A,B,C),
wherein as such relative movement takes place corresponding relative movement takes place between the support (10,12) on the one hand and the light source(s) (14) and camera(s) (22) on the other, the arrangement being such that the narrow band of light (or one such band) (20) is located so as to impinge on said surface portion in advance of engagement of the latter of a tool supported by the tool supporting means and is monitored by the camera (or the appropriate one of the cameras) (22) so as to determine the location of the light band (20) at any given part of the surface portion in advance of the tool operating on said part,
and wherein the processor means also monitors the position, in the first direction (A), of an operating surface of such tool and for each set of digitised coordinate axis values, determines from the current position of said surface a notional reference surface which extends in the first and second directions (A,B) and on which such operating surface lies, the relationship between the reference surface and the location of the narrow band of light (20)then being detected by the camera (22).

14. Apparatus according to any one of Claims 1 to 7 incorporated in a machine for operating progressively along or adjacent a selected marginal surface portion of an article (S), the machine comprising tool supporting means between which and an article supported by the support (10,12) relative movement can take place in the second and third directions (B,C),
wherein the light source (14) is so arranged that the narrow band of light (20) is located so as to impinge on the surface portion in advance of engagement of the latter by a tool supported by the tool supporting means, and wherein progressively the camera (22) detects the margin of such surface portion and also the configuration of the marginal portion as the light band (20) traverses over the surface portion as aforesaid and the processor means is effective to convert the successive locations of the light band (20) to digitised coordinate axis values representative of the configuration of said margin,
and further wherein the processor means on the basis of such values generates drive signals in response to which relative movement is effected between the tool supporting means and said article (S) in the second and third directions (B,C).

15. Apparatus according to any of Claims 1 to 7 incorporated in a machine for pulling an article (S) over a former (L) so as to locate the article (S) in a desired position thereon, the former (L) being supported by the support, said machine comprising an array of pincer means (30,32) by which the article (S) can be gripped and motor means (34) whereby relative movement can be caused to take place between the former (L) and the pincer means (30,32) such that the article (S) can be tensioned over the former (L),
wherein the values representative of the contour of the surface portion of the article (S) determined as aforesaid are compared with reference data defining the desired contour of the surface portion, and the motor means (34) are operated in response to such comparison so as to adjust the tension of the article (S) and thus the contour of the surface portion until the values representative of the contour of the surface portion correspond to the reference data, thereby indicating that the article (S) is located as desired.

16. Apparatus according to any one of Claims 1 to 7 wherein the article (S) is supported for rotation about an axis extending parallel to said third direction (C) and passing through the substance of the article (S), wherein by rotating the article (S) to present different surface portions thereof to the camera (22) the whole of the surface thereof can be digitised.
